# FASCICULE DE BREVET EUROPEEN

(11) **EP 3 519 300 B1**
(45) Date de publication et mention de la délivrance du brevet: **22.12.2021**
(21) Numéro de dépôt: 17786973.2
(22) Date de dépôt: 29.09.2017
(51) Int. Cl.: B64G 1/22, B64G 1/64

(54) **DISPOSITIF DE LIAISON PONCTUELLE PROVISOIRE**
VERBINDUNGSVORRICHTUNG FÜR PUNKTUELLE PROVISORISCHE VERBINDUNGEN
COUPLING DEVICE FOR PROVISIONAL PUNCTUAL CONNECTION

(30) Priorité: 03.10.2016 FR 1659526
(43) Date de publication de la demande: 07.08.2019
(73) Titulaire: ArianeGroup SAS, 75015 Paris (FR)
(72) Inventeur: COURREGELONGUE, Pierre, 33320 Le Taillan Medoc (FR)
(74) Mandataire: Brevalex
(86) Numéro de dépôt international: PCT/FR2017/052674
(87) Numéro de publication internationale: WO 2018/065704

(56) Documents cités:
- EP-A1- 0 699 581
- FR-A1- 2 876 985

## Description

### Domaine de l'invention

La présente invention se rapporte à un dispositif de liaison provisoire et de séparation de deux systèmes, de type verrouilleur/séparateur. Un tel dispositif peut notamment être utilisé dans l'industrie aéronautique et spatiale, pour relier provisoirement deux ensembles structurels et pour commander en un temps très bref leur séparation. Dans le domaine spatial, de tels dispositifs sont montés, par exemple sur les étages supérieurs des lanceurs pour fixer les charges utiles ou satellites, ou peuvent être utilisés pour la séparation de deux étages d'un lanceur ou, pour la découpe des structures porteuses de satellites. D'une part, ces dispositifs sont destinés à assurer une liaison entre deux éléments de sorte à les rendre solidaires, d'autre part, ils sont destinés à assurer une séparation fiable des deux systèmes en limitant les nuisances, telles que les pollutions solides, gazeuses, et les chocs induits vers les équipements des systèmes. En outre, dans le cas des lanceurs, les dispositifs verrouilleurs/séparateurs sont aptes à tenir les efforts de traction et de compression longitudinaux entre les deux éléments assemblés.

### Arrière plan technologique

D'un point de vue purement mécanique, la séparation de deux systèmes du domaine spatial, tels qu'un lanceur et sa charge utile, comporte en général deux aspects:
- Un aspect séparation proprement dite, où il s'agit d'abord de rompre la liaison mécanique entre la charge utile et le lanceur, on parle alors de déverrouillage;
- Un aspect éjection, car après un déverrouillage simple, si la charge utile n'est plus liée au lanceur, elle n'en reste pas moins accolée au lanceur si aucune autre action n'est faite. Il faut en principe donner une impulsion à la charge utile pour l'éloigner du lanceur, voire la mettre sur son orbite définitive.

Le contexte dans lequel se situe la technologie de la séparation est illustré par exemple par les documents FR 2 876 985 A1, FR 2 902 472 A1 et FR 2 947 808 A1. Les deux premiers documents portent sur des dispositifs de largage d'objet, le troisième concerne la séparations d'étages de lanceurs, et introduit la notion de séparation douce.

Par ailleurs, la séparation peut se faire de deux façons:
- Par rupture ou fusion d'une pièce, par exemple comme dans les documents FR 2 947 808 A1, Fr 2 661 464 A1 ou EP 0 699 581 A1
- Par démontage d'une liaison temporaire.

La présente invention se situe dans ce deuxième cas de figure.

Les systèmes de liaison provisoire avec fonction de séparation utilisés sur lanceur nécessitent généralement une forte pré-tension dans l'assemblage, notamment de plusieurs dizaines de milliers de Newton pour assurer le maintien correct d'une charge utile durant les diverses phases de vol d'une fusée.

De plus, ces systèmes sont généralement multipoints, généralement 3 ou 4 points d'accroche entre la charge utile telle qu'un satellite et le lanceur. Le temps de fonctionnement et surtout les dispersions sur cette durée doivent donc être très faibles, de l'ordre de quelques ms, pour garantir la libération et la mise à poste correcte de la charge utile.

Pour ces deux raisons, effort de déverrouillage important du fait de la pré-tension élevée et temps de fonctionnement réduit, ainsi que pour des contraintes de masse et d'encombrement, les dispositifs existants sont très souvent motorisés par une charge pyrotechnique et plus rarement par une capacité sous pression, solution pneumatique, ou par un actuateur électrique.

De nombreux types de dispositifs existent et notamment le document US 4,671,715 A décrit une liaison provisoire comportant un boulon avec une tête pourvue d'une partie annulaire déchirable sous l'action d'un piston poinçon pour réaliser une rupture sans choc.

Le document FR 2 959 787 A1 concerne pour sa part un dispositif pour séparer rapidement deux sous-ensembles, sous l'action d'un générateur de gaz pyrotechnique. Le dispositif comporte un écrou segmenté comportant deux demi écrous maintenus radialement serrés et séparables par un manchon de libération mobile sous l'action du générateur de gaz.

Pour les raisons invoquées précédemment (pré-tension importante, temps de fonctionnement bref, utilisation de charge pyrotechnique), un problème à considérer est d'éviter un choc violent, préjudiciable pour la charge utile, les structures lanceur et la qualité de la mise à poste, lors du déverrouillage.

Ces chocs sont de 3 sortes :
- Choc pyrotechnique dû à l'initiation de la charge pyrotechnique.
- Choc mécanique de fin de course des pièces mises en mouvement lors du fonctionnement du dispositif.
- Choc mécanique dû à la libération quasi-instantanée de l'énergie élastique de la pré-tension dans l'assemblage lors du déverrouillage.

La problématique est de réduire le niveau des chocs existants au sein des mécanismes de liaison provisoire tout en conservant des niveaux de pré-tension et de temps de déverrouillage permettant un emploi sur des système multipoints de mise à poste de satellites ou les systèmes nécessitant un temps de fonctionnement très bref.

Sachant que les technologies existantes ne permettent pas de concilier forte pré-tension, faible temps de déverrouillage et limitation des niveaux de choc dans les mécanismes de séparation de charge utile pour lanceur, l'invention a pour objectif un nouveau dispositif de déverrouillage satisfaisant en termes de coût, encombrement et masse permettant de limiter les chocs de séparation sur la charge utile; ce pour la séparation rapide, ponctuelle, c'est à dire selon des points d'attache localisés; et à faible choc de charges utiles montées sur des lanceurs civils ou militaires.

En outre, un mécanisme de séparation doit préférablement garantir un montage sans accès à la deuxième face de la charge utile, limiter au maximum les éléments résiduels sur la charge utile après séparation, être le plus léger possible et compact au sens que la course de l'élément rétractant est sensiblement égale à sa hauteur et que le diamètre du corps du dispositif est sensiblement celui de la fixation sur la charge utile.

Un autre objectif est d'atteindre un temps de fonctionnement réduit si possible inférieur à 10 ms avec une dispersion associée de l'ordre de la milliseconde, d'avoir un niveau de choc réduit et d'avoir une tenue mécanique et une pré-tension dans l'assemblage importante et stabilisée dans le temps.

### Brève description de l'invention

Dans ce cadre, la présente invention propose un dispositif verrouilleur/séparateur mécanique par rotation, comportant un corps principal, solidaire d'un premier système, muni d'un actionneur d'actionnement en rotation d'une tige rotative insérée dans le corps principal; et comportant un réceptacle, solidaire d'un second système à fixer de manière temporaire au premier système; pour lequel la tige rotative est mobile en translation sous l'action d'un ressort de rappel dans le corps principal et est munie d'une tête de verrouillage pourvue d'une première empreinte de verrouillage par rotation, complémentaire d'une seconde empreinte de verrouillage dudit réceptacle.

L'actionneur est couplé à la tige par l'intermédiaire d'une bague rotative de déverrouillage.

La bague rotative est munie d'un doigt d'actionnement, l'actionneur comportant une fourchette de manœuvre du doigt.

Selon un mode de réalisation particulier, l'actionneur est un actionneur pyrotechnique de type pyro-piston couplé à la tige par des moyens de transformation d'un mouvement linéaire du pyro-piston en un mouvement rotatif de la tige.

La bague et la tige comportent préférablement des butées d'engagement à l'extrémité d'une zone angulaire de course libre.

La tige est avantageusement mobile en translation dans le corps principal entre une position rétractée de détente du ressort et de libération du réceptacle et une positon avancée de compression du ressort et d'engagement avec le réceptacle.

Selon un premier mode de réalisation des première et seconde empreintes de verrouillage, la tête de la tige comporte au moins une empreinte quart de tour, le réceptacle comportant au moins un ergot complémentaire de l'empreinte.

Selon un deuxième mode de réalisation, la tête de la tige comporte une terminaison hélicoïdale conique, le réceptacle comportant un taraudage hélicoïdal conique complémentaire de ladite terminaison.

Selon un troisième mode de réalisation, la tête de la tige comporte au moins un ergot, le réceptacle comportant une lumière de passage de l'ergot et un logement de retenue de l'ergot espacés angulairement.

Selon un quatrième mode de réalisation, la tête de la tige et le réceptacle comportent chacun un filetage interrompu réalisant des secteurs angulaires dentés et des secteurs angulaires lisses, la mise en regard des secteurs dentés de la tête et du réceptacle verrouillant la tête dans le réceptacle, la mise en regard des secteurs dentés et des secteurs lisses libérant la tête du réceptacle.

Selon un mode de réalisation particulier, le dispositif verrouilleur/séparateur comporte une structure intermédiaire intercalée entre le réceptacle et le corps principal.

Selon un mode de réalisation préférentiel, la tige comporte à son extrémité opposée à la tête des moyens de mise en tension de l'assemblage du corps principal et du réceptacle.

L'invention propose en outre un satellite sur lanceur comportant au moins un dispositif selon l'une quelconque des revendications précédentes pour lequel le lanceur est le premier système et le satellite est le second système.

L'invention prévoit un procédé d'assemblage d'un satellite sur un lanceur équipés de dispositifs selon l'invention comportant les étapes de:
mise en position rétractée de la tige;
positionnement d'un moyen de mise en tension au niveau d'une extrémité filetée de la tige opposée à la tête;
pose du satellite sur la structure lanceur en alignant les réceptacles avec les tiges des verrouilleurs/séparateurs.
enfoncement des tiges manuellement ou avec un outillage dans le réceptacle jusqu'à enfoncement complet de la tête de tige dans le réceptacle;
mise en rotation de la tige d'un angle nécessaire pour engager les empreintes de verrouillage complémentaires de la tige et du réceptacle;
mise en tension de la tige en serrant les moyens de mise en tension de la tige.

### Brève description des dessins

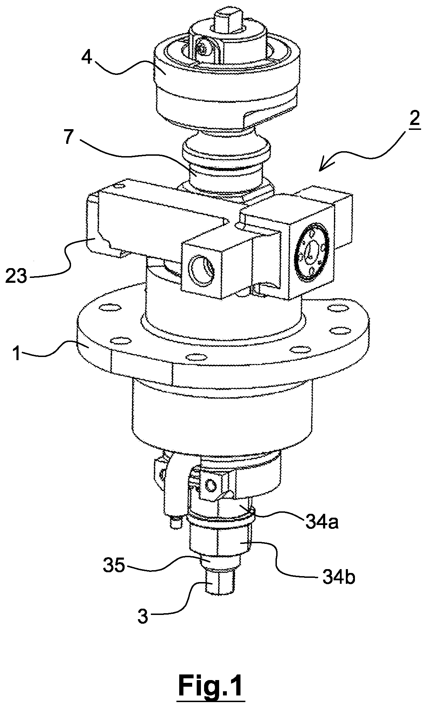

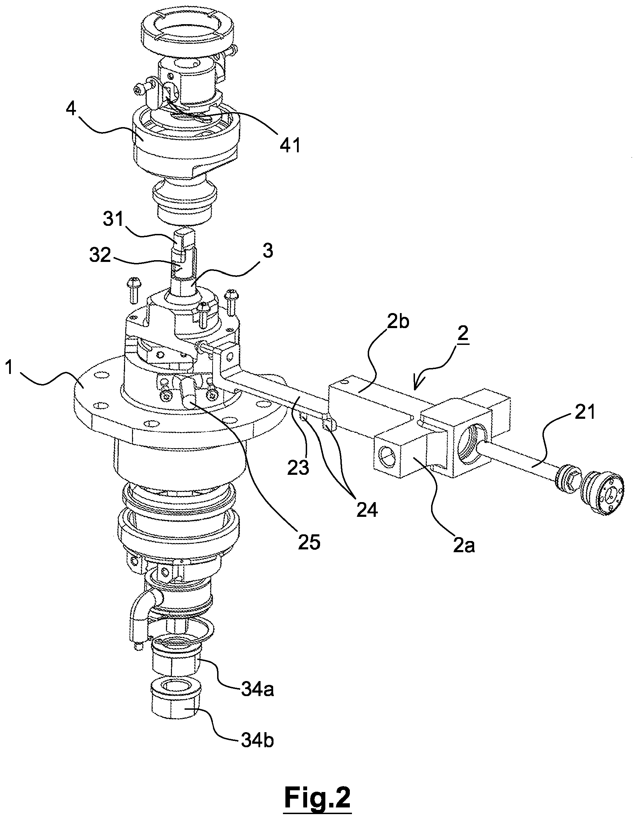

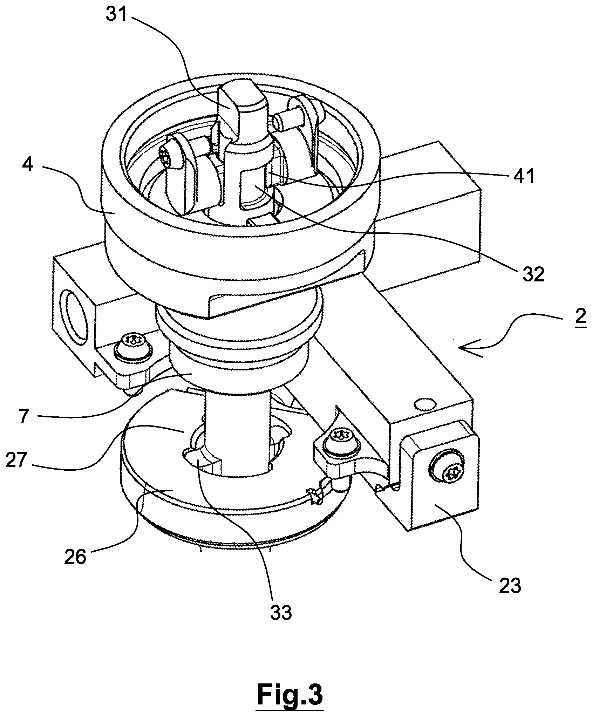

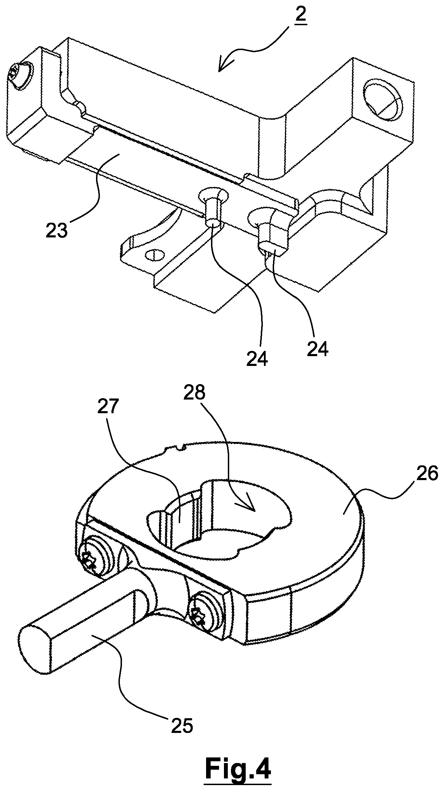

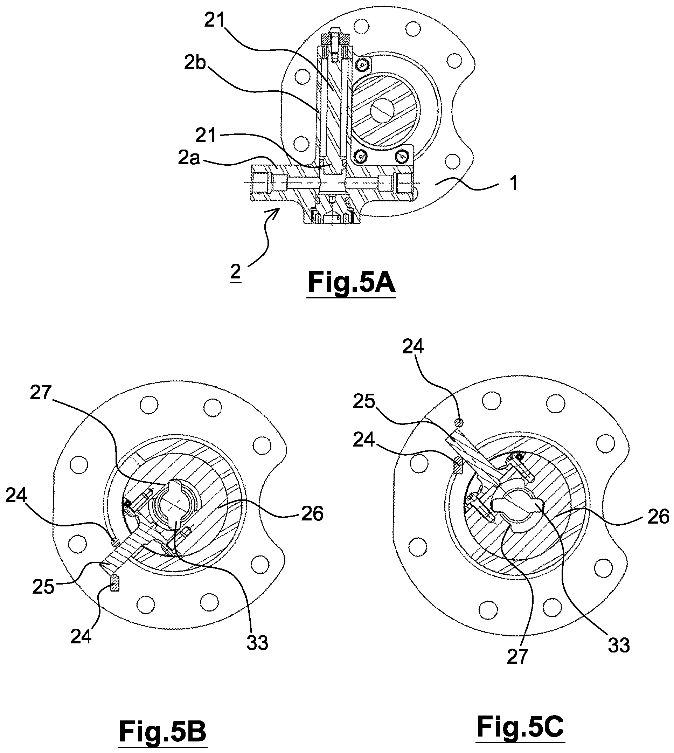

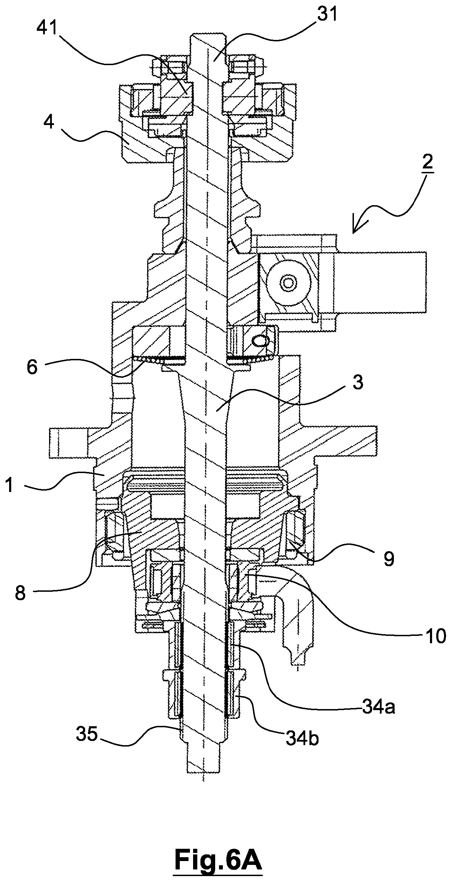

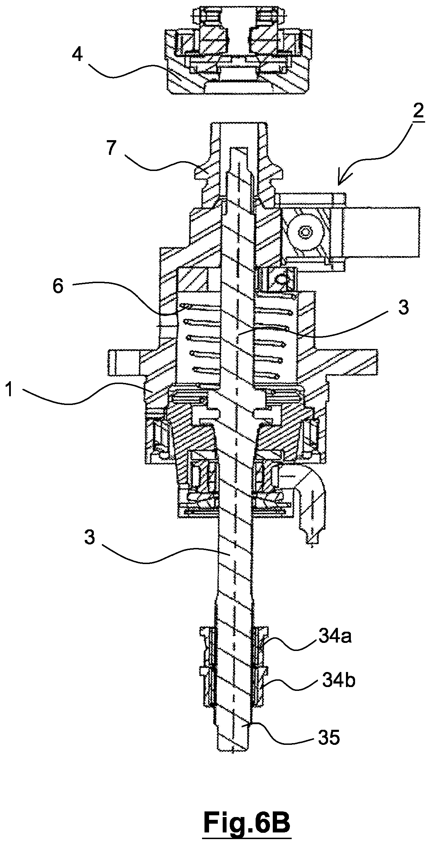

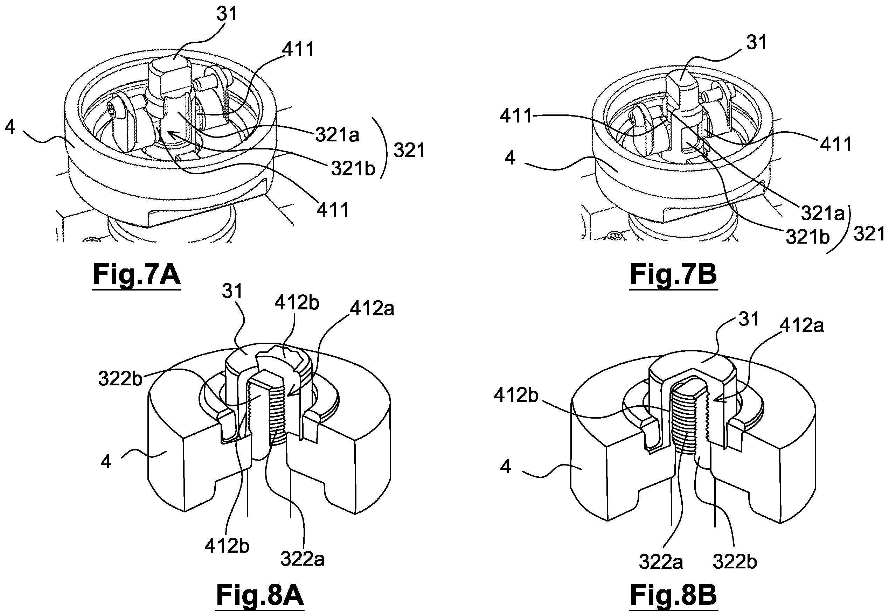

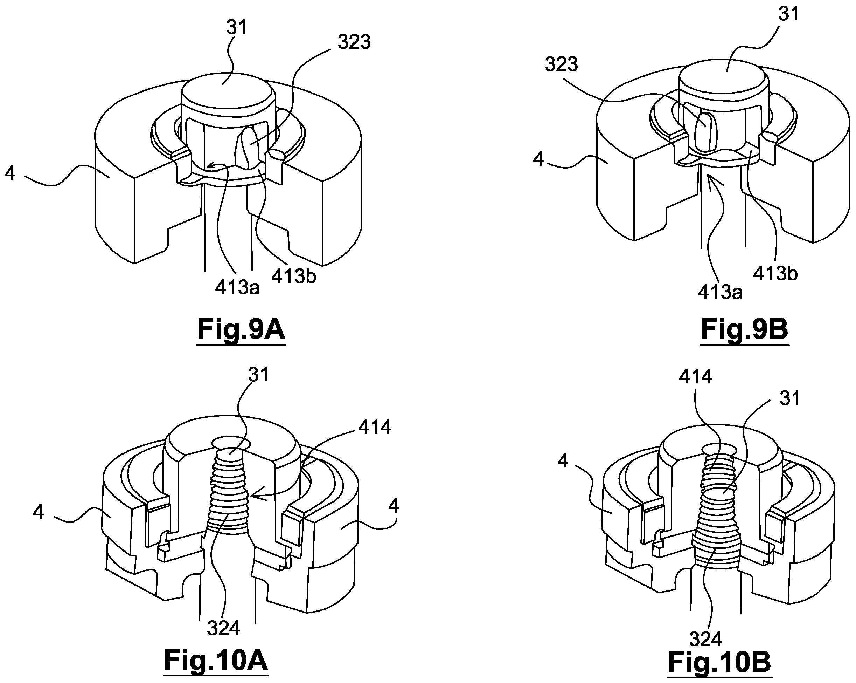

D'autres caractéristiques et avantages de l'invention seront apparents à la lecture de la description qui suit d'un exemple non limitatif de réalisation de l'invention en référence aux dessins qui représentent:
En figure 1: une vue en perspective d'un dispositif selon l'invention;
en figure 2: une vue en perspective éclaté du dispositif de la figure 1;
en figure 3 un détail en perspective du mécanisme de verrouillage/déverrouillage du dispositif de la figure 1;
en figure 4 une vue en perspective de moyens de déverrouillage du dispositif de la figure 1;
aux figures 5A à 5C: des vues de dessus en coupe d'éléments du dispositif de déverrouillage de la figure 4;
aux figures 6A et 6B: des vues en coupe de côté du dispositif de la figure 1 respectivement en position verrouillée et après séparation;
aux figures 7A, 7B: une vue en perspective d'un premier mode de réalisation de moyens de verrouillage respectivement en position verrouillée et en position déverrouillée;
aux figures 8A, 8B: une vue en perspective d'un deuxième mode de réalisation de moyens de verrouillage respectivement en position verrouillée et en position déverrouillée;
aux figures 9A, 9B: une vue en perspective d'un troisième mode de réalisation de moyens de verrouillage respectivement en position verrouillée et en position déverrouillée;
aux figures 10A, 10B: une vue en perspective d'un quatrième mode de réalisation de moyens de verrouillage respectivement en position verrouillée et en position déverrouillée.

### Description détaillée de modes de réalisation de l'invention

Le dispositif de l'invention trouve notamment son utilisation dans l'assemblage temporaire d'une charge utile telle qu'un satellite et d'un lanceur.

Le dispositif tel que représenté à titre d'exemple non limitatif dans les dessins comprend comme représenté notamment en figure 1 une première partie male, le verrouilleur/séparateur comportant un corps principal 1 fixé sur un premier système tel que la structure d'un lanceur, et une seconde partie femelle comportant un réceptacle 4 solidaire d'un second système tel qu'une charge utile et notamment un satellite.

Le dispositif de l'invention se verrouille et se déverrouille pour séparer les systèmes par rotation.

Pour ce faire, le réceptacle est fixé sur la charge utile en respectant une orientation angulaire précise par rapport à l'orientation du corps principal du dispositif.

Selon la figure 2, le dispositif verrouilleur/séparateur mécanique par rotation, comportant le corps principal 1, est muni d'un actionneur 2 d'actionnement en rotation d'une tige 3 rotative insérée dans le corps principal.

La tige 3 sert à la fixation et au verrouillage du réceptacle sur le corps principal et s'insère dans le réceptacle 4.

Selon la figure 3, la tige est munie d'une tête 31 de verrouillage pourvue d'une première empreinte 32 de verrouillage par rotation, complémentaire d'une seconde empreinte 41 dudit réceptacle.

Selon cet exemple repris aux figures 7A en position verrouillée et 7B en position déverrouillée, les empreintes de verrouillage sont du type baïonnette quart de tour avec sur la tige une empreinte 321 comportant une rainure d'entrée 321a selon l'axe de la tige et un logement 321b à 90° de l'axe de la tige prolongeant latéralement la rainure recevant un pion 411 formant l'empreinte de verrouillage du réceptacle.

De retour à la figure 3 et en référence à la figure 4, un mécanisme de déverrouillage du dispositif comporte une bague 26 rotative qui est adaptée à entraîner la tige en rotation dans le sens du déverrouillage au moyen de butées d'engagement 27, 33 sous l'action d'un actionneur 2.

Selon l'exemple, la bague porte deux premières butées 27 opposées disposées dans un logement cylindrique central de la bague. Le logement reçoit la tige et ses butées d'engagement 33.

Les butées de la bague sont disposées à 180 degrés l'une de l'autre et séparées par deux zones angulaire de course libre des butées 33 de la tige.

Lorsque la bague est en position de verrouillage de la tige, cette dernière peut se positionner dans une position angulaire d'introduction dans le réceptacle 4 pour laquelle les pions 41 sont reçus dans la rainure d'entrée de l'empreinte 32 de la tige puis être tournée pour verrouiller les pions dans les logements en bout de rainures et verrouiller le réceptacle sur le corps principal.

Dans cette position les butées 33 de la tige viennent en contact avec les butées 27 de la bague.

La figure 4 représente la bague 26 munie d'un doigt 25 qui est manœuvré par l'actionneur 2 au moyen d'un tiroir 23 pourvu de fourchettes 24 entre lesquelles se positionne le doigt.

De retour à la figure 2, l'actionneur 2 de l'exemple est de type pyro-piston comportant un corps générateur de gaz 2a porteur d'une charge pyrotechnique, un cylindre 2b dans lequel un piston 21 est apte à coulisser lors de l'explosion de la charge pyrotechnique. Le piston représenté aussi en figure 5A comporte une terminaison adaptée à pousser le tiroir 23 porteur de la fourchette 24 ce qui déplace la bague de la position de verrouillage représentée à la figure 5B vers la position de déverrouillage représentée à la figure 5C et fait tourner la tige libérant les pions du réceptacle des logements du dispositif de verrouillage à baïonnette comme dans la position de la figure 7B.

La tige rotative est mobile en translation sous l'action d'un ressort de rappel 6 dans le corps principal comme représenté aux figures 6A et 6B.

A la figure 6A qui correspond à la position angulaire de la tige des figures 5B et 7B, le dispositif est verrouillé et le ressort est comprimé. Lorsque le dispositif est déverrouillé en faisant tourner la bague et la tige vers les positions des figures 5C et 7A, la tige n'est plus retenue dans le réceptacle 4 et se rétracte dans le corps sous l'action du ressort 6 qui se détend comme représenté en figure 6B. Le réceptacle 4 est alors libéré.

Selon l'exemple représenté le dispositif comporte une structure intermédiaire 7 intercalée entre le réceptacle 4 et le corps principal du verrouilleur/séparateur pour les besoins de la mise à poste de la charge utile par exemple lorsqu'est présent un plateau éjecteur dans le cas de sondes nécessitant une mise en roulis.

Selon les figures 6A, 6B notamment, le verrouilleur/séparateur comporte un fond 8 solidarisé au corps principal 1 par un écrou 9 et comporte une cellule de compression 10 munie d'un capteur d'effort.

En position verrouillée, le réceptacle est mis en appui contre le corps principal par l'intermédiaire éventuellement de la structure intermédiaire 7 au moyen de moyens de serrage constitués ici par un écrou 34a, un contre écrou 34b et un filetage 35 sur la tige.

Une fois la tête de la tige verrouillée dans le réceptacle 4, l'écrou 34a est serré ce qui comprime l'ensemble fond 8, corps principal 1, structure intermédiaire 7 éventuelle et réceptacle 4 et met le dispositif en tension.

L'assemblage d'un satellite sur le lanceur équipés de dispositifs de l'invention est réalisé de la manière suivante:
En premier lieu, la tige 3 du verrouilleur/séparateur est en position reculée sous l'action du ressort 6.

L'écrou 34a de mise en tension est desserré et positionné au niveau de l'extrémité basse du filetage 35 de la tige pour qu'il ne gêne pas la phase d'assemblage.

Le satellite est posé sur la structure lanceur en alignant les réceptacles 4 avec les tiges 3 des verrouilleurs/séparateurs.

La tige du verrouilleur/séparateur est enfoncée manuellement ou avec un outillage, si présence d'un ressort de recul ou d'un système de freinage de la tige, dans le réceptacle jusqu'à ce que les butées quart de tour 41 soit en contact au fond de saignées ou rainures 321a de la tige.

La tige du verrouilleur/séparateur est tournée de l'angle nécessaire pour positionner les butées quart de tour en dessous de l'épaulement de la tige dans les logements 321b. La bague de déverrouillage 26 qui est pourvue des lumières 28 au droit des butées 33 de déverrouillage de la tige n'est pas entrainée en rotation par la tige durant cette phase et reste dans la position de verrouillage.

La tige est alors mis en tension en serrant l'écrou 34a jusqu'à obtenir la pré-tension visée. L'écrou est alors rendu solidaire de la tige au moyen d'un contre-écrou 34b ou de tout autre dispositif anti-rotation.

Pour le déverrouillage, dans l'exemple représenté, l'initiation d'une charge pyrotechnique génère une augmentation de pression à l'intérieur de la chambre 2b du pyro-piston 21 ce qui entraine le déplacement du piston 21 et le déplacement du tirant ou tiroir 23.

L'appui linéique de la fourchette 24 du tirant sur le doigt 25 de déverrouillage entraine la rotation de la bague 26 en pivot autour du corps du verrouilleur/séparateur.

La rotation de la bague de déverrouillage entraine celle de la tige, les butées 27 de la bague poussant sur les butées ou clavettes 33 de la tige. La rotation de la bague et de la tige, de 90° dans l'exemple représenté s'arrête après mise en butée des différents éléments mobiles.

Les pions 41 des empreintes quart de tour sont alors dégagées des logements 321b de la tige, ce qui permet le recul de celle-ci. La rétractation de la tige peut être réalisée de plusieurs manières:
Par la pré-tension résiduelle dans la tige au moment du dégagement des butées quart de tour, la tige se comporte alors comme un ressort qui recule de lui-même.

Par un ressort de compression 6 installé à l'intérieur du verrouilleur/séparateur ou à l'extérieur du verrouilleur/séparateur au niveau de l'écrou arrière.

Par l'utilisation des gaz comprimés encore disponibles à l'intérieur de la chambre du pyropiston pour générer une poussée sur la tige du verrouilleur/séparateur. Cette solution nécessite de rendre étanche le volume interne du corps de verrouilleur/séparateur, d'ajouter un passage de gaz entre le pyro-piston et une chambre de poussée de la tige dans le corps principal et d'associer un dispositif piston à la tige.

Il est à noter que le dispositif pyrotechnique réalisant l'actionneur 2 représenté peut être remplacé par d'autres sources d'énergie telles qu'énergie électrique, mécanique, pneumatique ou hydraulique.

Comme vu plus haut, le dispositif de verrouillage entre la tête et le réceptacle des figures 7A, 7B est un dispositif à baïonnette; la tête de la tige comportant au moins une empreinte à rainure de verrouillage quart de tour 321, le réceptacle comportant au moins un ergot 411 complémentaire de l'empreinte.

La partie de verrouillage entre la tige et le réceptacle peut toutefois être réalisée par d'autres moyens qu'un dispositif à baïonnette et notamment aux figures 8A, 8B est représenté un deuxième mode de réalisation de moyens de verrouillage pour lequel la tête de la tige et le réceptacle comportent chacun un filetage interrompu réalisant des secteurs angulaires dentés 322a, 412a et des secteurs angulaires lisses 322b, 412b. Selon la figure 8A pour laquelle une partie du réceptacle est coupée, la mise en regard des secteurs dentés de la tête et du réceptacle verrouillent la tête dans le réceptacle par engagement des dentures. Selon la figure 8B, la mise en regard des secteurs dentés et des secteurs lisses libèrent la tête du réceptacle.

Selon cet exemple, la tête et le réceptacle comportent chacun deux secteurs lisses et deux secteurs dentés intercalés à 90°.

Un troisième mode de réalisation est représenté aux figures 9A, 9B. Selon ce mode de réalisation, la tête de la tige comporte au moins un ergot 323 alors que le réceptacle comporte une lumière 413a de passage de l'ergot et un logement 413b de retenue de l'ergot espacés angulairement.

En figure 9A l'ergot est positionné sur son logement de retenue 413b et la tête est verrouillée dans le réceptacle 4, en figure 9B, l'ergot est disposé en regard de la lumière 413a et la tête peut se dégager du réceptacle.

Selon cet exemple, deux ergots sont disposés à 180° sur la tige et le réceptacle comporte deux logements à 180 ° et deux lumières à 180° intercalés pour permettre un verrouillage déverrouillage sous un angle de rotation de la tige de 90°.

Un quatrième mode de réalisation est représenté aux figures 10A, 10B, la tête de la tige comporte une terminaison hélicoïdale conique 324 et le réceptacle comporte un taraudage hélicoïdal 414 conique complémentaire de ladite terminaison.

Dans ce dernier cas, la rotation n'est plus de l'ordre de 90° mais de plusieurs tours, par exemple entre 3 et 6 en fonction du pas de la vis et de l'angle du cône pour permettre le dégagement de la tige par rapport au réceptacle.

Dans un tel cas, les moyens de transformation de mouvement qui permettent à l'actionneur de tourner la tige peut éventuellement être réalisé sous forme d'une crémaillère sur tirant ou tiroir 23 agissant sur un pignon denté autour de la tige.

Ainsi pour le verrouillage/déverrouillage de la tête dans le réceptacle la rotation peut varier de quelques dizaines de degrés jusqu'à plusieurs fois 360° selon le positionnement des moyens de verrouillage.

Le principe de déverrouillage par rotation permet de simplifier la mise en œuvre du dispositif. La mise en tension de mécanisme est réalisée par un système vis-écrou 34a, 35 à l'arrière de la tige qui permet de piloter finement la précharge dans l'assemblage, par serrage au couple, serrage à l'angle, mesure de l'effort dans la tige par mesure ultrasonore ou par cellule à jauge de déformation 10. Si la précision recherchée sur la pré-tension n'est pas trop élevée pour certaines applications, il est possible de maitriser la qualité de l'assemblage en réglant et maîtrisant les dispersions géométriques des pièces à assembler, verrouilleur/séparateur, charge utile et éventuellement structure intermédiaire. Le dispositif se comportera alors comme un simple connecteur à baïonnette qu'il suffit d'enfoncer dans la charge utile et de tourner de 90° ou de la valeur d'angle optimale pour assurer le maintien des éléments entre eux.

Le mécanisme de l'invention, tout en restant dans des temps de fonctionnement bref, permet de réduire sensiblement les chocs en utilisant les principes suivants :
- Un déverrouillage par mise en rotation des pièces, au lieu d'une translation par écartement ou recul d'éléments, qui permet d'éloigner les chocs de fin de course. En outre, le mécanisme est conçu pour que la tige se rétracte vers la structure lanceur et aucun élément mobile n'est projeté à l'intérieur du satellite ou de la sonde.
- Une rotation de la bague et un déplacement du piston parallèles au plan de pose du satellite, ce qui évite de générer des décollements de la zone de contact lanceur/satellite comme sur les verrouilleurs/séparateurs existants, de tels décollements étant préjudiciable pour la qualité de mise à poste de la charge utile.

En outre, le plan de contact des butées de rotation peut être incliné de quelques degrés, ce qui réduit progressivement la pré-tension dans l'assemblage durant la rotation du système de manière à libérer progressivement l'énergie élastique présente dans la tige.

Avantageusement, le système est optimisé en termes de raideur de l'assemblage, d'angle de déverrouillage et d'inclinaison du plan de contact des butées de sorte qu'il n'y ait plus de pré-tension dans la tige en fin de rotation.

On peut cependant, de manière alternative, conserver une partie de la pré-tension initiale en fin de rotation au moment du dégagement de la partie male de la partie femelle du dispositif de rotation. Dans ce cas on utilise cette énergie résiduelle pour générer le recul de la tige sans nécessiter de dispositif de recul additionnel tels qu'un ressort, des gaz du pyro-piston ou autre.

Enfin, l'inclinaison du plan d'appui des butées peut être suffisamment faible, par exemple de l'ordre du pas d'une vis aéronautique pour ne pas risquer le desserrage de la tige sous ambiance dynamique et notamment en cas de vibrations et de chocs. Un moyen supplémentaire de freinage de la tige, lame ressort, pion de cisaillement, joint mettant en contrainte la tige sur le corps du verrouilleur/séparateur peut toutefois être installé dans le mécanisme si besoin.

Le mécanisme est conçu avec une démultiplication fonction de la distance de déplacement du piston et de la longueur du doigt 25 de la bague ce qui réduit l'énergie nécessaire pour amorcer et entretenir le déverrouillage. Ceci permet de limiter la quantité de charge pyrotechnique nécessaire au déclenchement du dispositif et donc le choc pyrotechnique associé.

Il est à noter que le système à fourchette 24 et doigt 25 peut être modifié par exemple en utilisant un pion sur le tiroir qui se déplace dans une rainure dans le doigt ou comme vu plus haut par un système à crémaillère.

Selon un mode de réalisation alternatif, le pyro-piston est remplacé par une motorisation mécanique de type ressort de compression, barre de torsion ou autre dispositif hydraulique, électrique ou pneumatique.

Cette solution par rotation présente aussi d'autres avantages. Elle permet de réaliser un dispositif composé de moins de pièces que les systèmes existants et de réduire par là même le coût du mécanisme tout en augmentant sa fiabilité intrinsèque puisque la chaine d'effort entre la structure lanceur et le charge utile est composée d'un minimum de pièces.

Le système, toujours grâce à un déverrouillage par rotation plutôt que par translation, permet aussi d'être très compétitif en masse et en encombrement, en particulier longitudinalement ou en diamètre au niveau de l'interface charge utile, que ce soit côté lanceur comme côté charge utile. Il peut même être envisagé de fusionner le corps du verrouilleur/séparateur avec la structure porteuse du lanceur pour gagner encore en compacité et en masse, ce que la plupart des mécanismes existants ne permet pas, de par leur mise en œuvre et leur complexité.

Enfin, toujours sur l'aspect mise en œuvre, ce système ne génère pas d'endommagement des structures adjacentes et du mécanisme lui-même lors du déverrouillage. Il est donc réarmable, réutilisable et peut constituer une source de gains de coût dans le cadre de système de séparation de véhicules spatiaux ou d'étages de lanceur réutilisables.

Hors application spatiales, le dispositif de l'invention peut être envisagé sur des applications nécessitant un déverrouillage rapide, à faible choc, à forte pré-tension et à haut niveau de fiabilité, par exemple sur des attaches entre avion militaire ou civil et une charge utile à libérer, missile ou avion spatial par exemple.

Il peut aussi être envisagé de convertir ce verrouilleur/séparateur en un dispositif combinant les fonctions de séparation et d'éjection en utilisant la mise en mouvement de la tige pour l'éjection de la charge utile à mettre à poste.

## Revendications

1. Dispositif verrouilleur/séparateur mécanique par rotation, comportant un corps principal (1), solidaire d'un premier système, muni d'un actionneur (2) d'actionnement en rotation d'une tige (3) rotative insérée dans le corps principal; et comportant un réceptacle (4), solidaire d'un second système à fixer de manière temporaire au premier système; la tige rotative étant mobile en translation sous l'action d'un ressort de rappel (6) dans le corps principal et étant munie d'une tête (31) de verrouillage pourvue d'une première empreinte (32) de verrouillage par rotation, complémentaire d'une seconde empreinte (41) dudit réceptacle, **caractérisé en ce que** l'actionneur (2) est couplé à la tige par l'intermédiaire d'une bague rotative (26) de déverrouillage munie d'un doigt d'actionnement (25), l'actionneur comportant une fourchette (24) de manœuvre du doigt.

2. Dispositif verrouilleur/séparateur mécanique selon la revendication 1 pour lequel l'actionneur (2) est un actionneur pyrotechnique de type pyro-piston couplé à la tige par des moyens (23, 24, 25, 26) de transformation d'un mouvement linéaire du pyro-piston en un mouvement rotatif de la tige.

3. Dispositif verrouilleur/séparateur mécanique selon la revendication 1 ou 2 pour lequel la bague (26) et la tige (3) comportent des butées d'engagement (27, 33) à l'extrémité d'une zone angulaire de course libre.

4. Dispositif verrouilleur/séparateur mécanique selon l'une quelconque des revendications 1 à 3 pour lequel la tige (3) est mobile en translation dans le corps principal entre une position rétractée de détente du ressort (6) et de libération du réceptacle (4) et une positon avancée de compression du ressort et d'engagement avec le réceptacle.

5. Dispositif verrouilleur/séparateur mécanique selon l'une quelconque des revendications précédentes pour lequel la tête de la tige comporte au moins une empreinte quart de tour (321), le réceptacle comportant au moins un ergot (411) complémentaire de l'empreinte.

6. Dispositif verrouilleur/séparateur mécanique selon l'une quelconque des revendications 1 à 4 pour lequel la tête de la tige et le réceptacle comportent chacun un filetage interrompu réalisant des secteurs angulaires dentés (322a, 412a) et des secteurs angulaires lisses (322b, 412b), la mise en regard des secteurs dentés de la tête et du réceptacle verrouillant la tête dans le réceptacle, la mise en regard des secteurs dentés et des secteurs lisses libérant la tête du réceptacle.

7. Dispositif verrouilleur/séparateur mécanique selon l'une quelconque des revendications 1 à 4 pour lequel la tête de la tige comporte au moins un ergot (323, le réceptacle comportant une lumière (413a) de passage de l'ergot et un logement (413b) de retenue de l'ergot espacés angulairement.

8. Dispositif verrouilleur/séparateur mécanique selon l'une quelconque des revendications 1 à 4 pour lequel la tête de la tige comporte une terminaison hélicoïdale conique (324), le réceptacle comportant un taraudage hélicoïdal (414) conique complémentaire de ladite terminaison.

9. Dispositif verrouilleur/séparateur mécanique selon l'une quelconque des revendications précédentes comportant une structure intermédiaire (7) intercalée entre le réceptacle (4) et le corps principal (1).

10. Dispositif verrouilleur/séparateur mécanique selon l'une quelconque des revendications précédentes pour lequel la tige (3) comporte à son extrémité opposée à la tête des moyens (34a, 34b, 35) de mise en tension de l'assemblage du corps principal et du réceptacle.

11. Assemblage satellite sur lanceur comportant au moins un dispositif selon l'une quelconque des revendications précédentes pour lequel le lanceur est le premier système et le satellite est le second système.

12. Procédé d'assemblage d'un satellite sur un lanceur équipés de dispositifs selon l'une quelconque des revendications 1 à 9 comportant les étapes de:
mise en position rétractée de la tige (3);
positionnement d'un moyen (34a) de mise en tension au niveau d'une extrémité filetée (35) de la tige opposée à la tête (31);
pose du satellite sur la structure lanceur en alignant les réceptacles (4) avec les tiges (3) des verrouilleurs/séparateurs.
enfoncement des tiges manuellement ou avec un outillage dans le réceptacle jusqu'à enfoncement complet de la tête (31) de tige dans le réceptacle (4);
mise en rotation de la tige d'un angle nécessaire pour engager les empreintes de verrouillage complémentaires (32, 41)de la tige et du réceptacle;
mise en tension de la tige en serrant les moyens (34a) de mise en tension de la tige.

## Patentansprüche

1. Mechanische Dreh-Verriegelungs-/Trennvorrichtung, enthaltend einen Hauptkörper (1), der fest mit einem ersten System verbunden ist und mit einem Betätigungsglied (2) zur Drehbetätigung eines in den Hauptkörper eingesetzten Drehschafts (3) versehen ist; und enthaltend einen Aufnehmer (4), der fest mit einem zweiten System verbunden ist, das vorübergehend an das erste System zu befestigen ist; wobei der Drehschaft unter der Wirkung einer Rückstellfeder (6) im Hauptkörper translatorisch beweglich ist und mit einem Verriegelungskopf (31) versehen ist, der mit einer ersten Ausformung (32) zur Drehverriegelung versehen ist, die zu einer zweiten Ausformung (41) des Aufnehmers komplementär ausgebildet ist,
**dadurch gekennzeichnet, dass**
das Betätigungsglied (2) mit dem Schaft über einen drehbaren Entriegelungsring (26) gekoppelt ist, der mit einem Betätigungsfinger (25) versehen ist, wobei das Betätigungsglied eine Stellgabel (24) für den Finger enthält.

2. Mechanische Verriegelungs-/Trennvorrichtung nach Anspruch 1, wobei das Betätigungsglied (2) ein pyrotechnisches Betätigungsglied vom Typ Pyrokolben ist, der mit dem Schaft über Mittel (23, 24, 25, 26) zur Umwandlung einer linearen Bewegung des Pyrokolbens in eine Drehbewegung des Schafts verbunden ist.

3. Mechanische Verriegelungs-/Trennvorrichtung nach Anspruch 1 oder 2, wobei der Ring (26) und der Schaft (3) Eingriffsanschläge (27, 33) am Ende eines Freilaufwinkelbereichs aufweisen.

4. Mechanische Verriegelungs-/Trennvorrichtung nach einem der Ansprüche 1 bis 3, wobei der Schaft (3) im Hauptkörper zwischen einer eingefahrenen Position zum Entspannen der Feder (6) und Freigabe des Aufnehmers (4) und einer vorgeschobenen Position zum Komprimieren der Feder und Eingriff mit dem Aufnehmer translatorisch beweglich ist.

5. Mechanische Verriegelungs-/Trennvorrichtung nach einem der vorhergehenden Ansprüche, wobei der Kopf des Schafts mindestens eine Vierteldrehungs-Ausformung (321) aufweist, wobei der Aufnehmer mindestens einen zu der Ausformung komplementären Vorsprung (411) aufweist.

6. Mechanische Verriegelungs-/Trennvorrichtung nach einem der Ansprüche 1 bis 4, wobei der Kopf des Schafts und der Aufnehmer jeweils ein unterbrochenes Gewinde aufweisen, das gezahnte Winkelsektoren (322a, 412a) und glatte Winkelsektoren (322b, 412b) bildet, wobei durch Gegenüberstellung der gezahnten Sektoren von Kopf und Aufnehmer der Kopf in dem Aufnehmer verriegelt wird und durch Gegenüberstellung der gezahnten Sektoren und der glatten Sektoren der Kopf vom Aufnehmer freigegeben wird.

7. Mechanische Verriegelungs-/Trennvorrichtung nach einem der Ansprüche 1 bis 4, wobei der Kopf des Schafts mindestens einen Vorsprung (323) aufweist, wobei der Aufnehmer einen Schlitz (413a) für den Durchtritt des Vorsprungs und eine Aufnahme (413b) zum Halten des Vorsprungs aufweist, die winkelmäßig voneinander beabstandet sind.

8. Mechanische Verriegelungs-/Trennvorrichtung nach einem der Ansprüche 1 bis 4, wobei der Kopf des Schafts einen konischen, schraubenförmigen Abschluss (324) aufweist, wobei der Aufnehmer ein zu diesem Abschluss komplementäres, konisches, schraubenförmiges Innengewinde (414) aufweist.

9. Mechanische Verriegelungs-/Trennvorrichtung nach einem der vorhergehenden Ansprüche, enthaltend eine Zwischenstruktur (7), die zwischen dem Aufnehmer (4) und dem Hauptkörper (1) angeordnet ist.

10. Mechanische Verriegelungs-/Trennvorrichtung nach einem der vorhergehenden Ansprüche, wobei der Schaft (3) an seinem dem Kopf entgegengesetzten Ende Mittel (34a, 34b, 35) zum Verspannen der Anordnung aus Hauptkörper und Aufnehmer aufweist.

11. Satellitenanordnung an einer Trägerrakete mit mindestens einer Vorrichtung nach einem der vorhergehenden Ansprüche, wobei es sich bei der Trägerrakete um das erste System und bei dem Satelliten um das zweite System handelt.

12. Verfahren zum Anordnen eines Satelliten an einer Trägerrakete, die mit Vorrichtungen nach einem der Ansprüche 1 bis 9 ausgestattet sind, umfassend die folgenden Schritte:
Führen des Schafts (3) in eine eingefahrene Position;
Positionieren eines Spannmittels (34a) an ein dem Kopf (31) entgegengesetztes Gewindeende (35) des Schafts;
Aufsetzen des Satelliten auf die Trägerraketenstruktur durch Ausrichten der Aufnehmer (4) mit den Schäften (3) der Verriegelungs-/Trennvorrichtungen,
Einschieben der Schäfte von Hand oder mit einem Werkzeug in den Aufnehmer, bis der Schaftkopf (31) vollständig in den Aufnehmer (4) eingeführt ist;
Verdrehen des Schafts um einen Winkel, der erforderlich ist, um die komplementären Verriegelungsausformungen (32, 41) von Schaft und Aufnehmer in Eingriff zu bringen;
Verspannen des Schafts durch Festziehen der Schaftspannmittel (34a).

## Claims

1. Device for mechanical locking/separation by rotation, including a main body (1), secured to a first system, provided with an actuator (2) for rotatably actuating a rotary rod (3) inserted into the main body; and including a receptacle (4), secured to a second system to be attached temporarily to the first system; the rotary rod being movable in translation under the action of a return spring (6) in the main body and being provided with a locking head (31) provided with a first recess (32) for locking by rotation, complementary with a second recess (41) of said receptacle, **characterised in that** the actuator (2) is coupled with the rod by means of a rotary unlocking ring (26) provided with an actuation finger (25), the actuator including a yoke (24) for operating the finger.

2. Device for mechanical locking/separation according to claim 1 for which the actuator (2) is a pyro-piston type pyrotechnic actuator coupled with the rod by means (23, 24, 25, 26) for converting a linear movement of the pyro-piston into a rotary movement of the rod.

3. Device for mechanical locking/separation according to claim 1 or 2 for which the ring (26) and the rod (3) include engagement stops (27, 33) at the end of an angular free travel zone.

4. Device for mechanical locking/separation according to any one of claims 1 to 3 for which the rod (3) is movable in translation in the main body between a retracted position for slackening the spring (6) and releasing the receptacle (4) and a deployed position for compressing the spring and engaging with the receptacle.

5. Device for mechanical locking/separation according to any one of the preceding claims for which the rod head includes at least one quarter-turn recess (321), the receptacle including at least one lug (411) complementary with the recess.

6. Device for mechanical locking/separation according to any one of claims 1 to 4 for which the rod head and the receptacle each include an interrupted thread forming toothed angular sectors (322a, 412a) and smooth angular sectors (322b, 412b), placing the toothed sectors of the head and the receptacle opposite one another locking the head in the receptacle, placing the toothed sectors and the smooth sectors opposite one another releasing the head from the receptacle.

7. Device for mechanical locking/separation according to any one of claims 1 to 4 for which the head of the rod includes at least one lug (323), the receptable including an opening (413a) for inserting the lug and a housing (413b) for retaining the lug spaced apart angularly.

8. Device for mechanical locking/separation according to any one of claims 1 to 4 for which the head of the rod includes a conical helical end (324), the receptacle including a conical helical thread (414) complementary with said end.

9. Device for mechanical locking/separation according to any one of the preceding claims including an intermediate structure (7) inserted between the receptacle (4) and the main body (1).

10. Device for mechanical locking/separation according to any one of the preceding claims for which the rod (3) includes at the end thereof opposite the head means (34a, 34b, 35) for tensioning the assembly of the main body and the receptacle.

11. Satellite assembly on launcher including at least one device according to any one of the preceding claims for which the launcher is the first system and the satellite is the second system.

12. Method for assembling a satellite on a launcher equipped with devices according to any one of claims 1 to 9 including the steps of:
placing the rod (3) in a retracted position;
positioning a tensioning means (34a) at a threaded end (35) of the rod opposite the head (31);
placing the satellite on the launcher structure by aligning the receptacles (4) with the rods (3) of the locking/separating devices,
driving the rods manually or with a tool into the receptacle until the rod head (31) is fully driven into the receptacle (4);
rotating the rod by an angle required to engage the complementary locking recesses (32, 41) of the rod and the receptacle;
tensioning the rod by fastening the means (34a) for tensioning the rod.
